# EUROPEAN PATENT APPLICATION

(11) **EP 3 279 503 A1**
(43) Date of publication of application: **07.02.2018**
(21) Application number: 17172390.1
(22) Date of filing: 23.05.2017
(51) Int. Cl.: F16F 15/18, F16H 35/02, F16H 3/72

(54) **METHOD FOR ABSORBING VIBRATIONS AND A VIBRATION ABSORBING DEVICE**

(30) Priority: 04.08.2016 CZ 20160471
(71) Applicant: VÚTS, a.s., Liberec XI - Ruzodol I 460 01 Liberec (CZ)
(72) Inventor: Marek, Ondrej, 460 14 Liberec 13 (CZ)
(74) Representative: Musil, Dobroslav

(57) **Abstract**

The invention relates to a method for absorbing vibrations of a driving device, which is driven by a cyclical motion at a constant angular velocity, whereby flexibly resilient connecting shaft (5) is arranged before the driven mechanism between the driving electric motor (20) of the driving device (1) and the input member (4) of the driven mechanism, whereby the driving cyclical motion at a constant angular velocity is brought by means of the driving electric motor (20) to rotating circumferential cams (202, 203) which ensure corrective bidirectional stepping motion of a carousel (801), wherein to the driving device (1) is fed a driving cyclical motion by an electric motor and a corrective motion (20) by a corrective electric motor (80), whereupon the two motions are added up mechanically and the total motion of the driving electric motor (20) and of the corrective electric motor (80) is brought to the output member (3) of the driving device (1) before the flexibly resilient connecting shaft (5).

The invention also relates to a device for performing the method for absorbing vibrations of a driving device (1) for driving a mechanism by a cyclical motion, in which a flexibly resilient connecting shaft (5) is inserted between the output member (3) of the driving device (1) and the input member (4) of the driven mechanism.

## Description

### Technical field

The invention relates to a method for absorbing vibrations of a driving device driven by a cyclical motion at a constant angular velocity, wherein a resilient system is provided before a driven mechanism between the electric motor of the driving device and an input member of the driven mechanism.

The invention also relates to a device for performing the method for absorbing vibrations of a driving device for driving a mechanism by a cyclical motion in which a resilient system is installed between an output member of the driving device and an input member of the driven mechanism, the driving device comprising a driving electric motor with a constant angular velocity, whose output shaft is connected to a camshaft comprising two circumferential cams which engage with carousel rollers, the carousel axis and the axis of its rollers being parallel to the camshaft.

### Background art

In machine mechanisms whose output member is supposed to drive the machine working organ by a cyclical intermittent or reciprocating motion it is necessary to prevent vibrations of this working organ. It is not always possible for the system connected to the output member to have such a stiffness that would prevent the vibrations of the end working member. For example, when driving a rotary table with a clamped tool or manufactured workpiece currently being processed, the long driving shaft between the output member and the rotary table is a flexible element which causes vibrations of the rotary table relative to its inertial mass.

There are various methods of suppressing residual oscillations generated by a single source, such as a rotary driving motor. Stepped rotation of its output shaft means repeated alternating acceleration of its motion after one dead centre and deceleration before the other dead centre. For example, absorbing the torsional vibration of a long resilient system with known absorbers is difficult and often the only option is to fundamentally change the design of a particular part of the device.

The aim of the invention is to eliminate or at least reduce the drawbacks of the background art, namely to achieve a substantial reduction in the oscillation of the resilient systems both in terms of the frequency and in terms of the amplitudes of this oscillation.

### Principle of the invention

The aim of the invention is achieved by a method for absorbing vibrations of a device driven by a cyclical motion at a constant angular velocity, in which a resilient system is provided between the output member of the driving device and the input member of the driven mechanism, whose principle consists in that programmable controlled corrective motion is brought to the driving device by a corrective electric motor, whereupon the two motions are mechanically added together and the total motion of the driving electric motor and the corrective electric motor is brought to the output member of the driving device.

The driving cyclical motion is transformed into a driving intermittent rotational motion, the active phase of which is a driving rotational motion with a varying angular velocity, and the rotational motion with the programmed varying angular velocity is provided to produce a corrective motion.

The goal of the invention is also achieved by a device for performing the vibration absorbing method for the driving device.

The driving continuous rotational motion with a constant angular velocity is transformed into an intermittent rotational motion by the action of two cams, which is advantageous with respect to the variability of the cam shape, as well as in terms of achieving optimal vibration damping and in terms of reasonable acquisition costs of the machine equipment.

### Description of drawings

The device according to the invention is schematically represented in the drawing, wherein Fig. 1 is a block diagram of the device, Fig. 2 is an oblique view of the device arranged in a support frame, Fig. 3 is a comparison of the desired theoretical time course of the stroke of the end member of the device to the actual time course without using a corrective motor and Fig. 4 shows an actual time course of the stroke of the end member of the device with the use of the corrective motor and the corresponding time course of the stroke of the corrective motor.

### Examples of embodiment

The aim of the device according to the invention is damping the oscillations of the resulting motion of the driven end member, which is coupled to an output member of a driving device by means of a resilient system, whose flexible element is, for example, a long shaft, through which a cyclical stepped rotational motion is to be brought from the driving motor to the driven end member, whereby during this motion, for example, turning (angular displacement) and idle period alternate. This driving method results in alternating acceleration and deceleration of the output of the driving device, which is a source of vibrations. These vibrations do not allow achieving the desired resulting motion of the end member of the device.

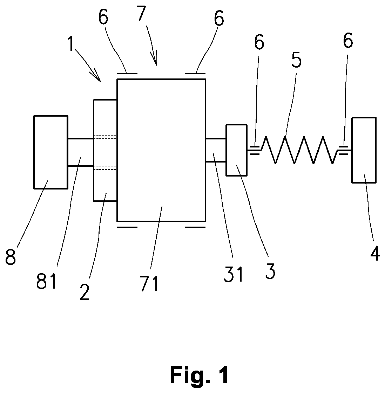

Fig. 1 shows a block diagram of the driving device **1.** The first input member **2** is a motor imparting the main driving torque, which by itself generates the desired cyclical motion, namely the turning of the output member 3 of the driving device **1.** An input member **4** of the driven mechanism is connected to the output member **3**, for example a rotary table with a tool clamp or a clamping device for workpieces, which is supposed to perform the desired cyclical motion generated by the first input member **2.**

The output member **3** of the driving device **1** is connected to the input member **4** of the driven mechanism by a long connecting shaft **5**, which is a flexibly resilient part at the ends mounted in a frame **6**.

Between the first input member **2** of the driving device **1** and the output member **3** of the driving device **1** is arranged substantially any known type of a gear mechanism **7** with a constant gear, such as a planetary gear mechanism, a harmonic gearbox, etc. A prerequisite is the coaxial arrangement of its input and output shafts.

To explain the principle, a planetary gear mechanism is used for the purpose of the description. The body **71** of the gear mechanism **7** is rotatably mounted in the frame **6**, being fixedly connected to the first input member **2** of the driving device **1.** The first input member **2** is thus connected to an unillustrated annulus gear of the gear mechanism **7**, through which it is coupled to unillustrated satellites, their carrier and the shaft of the carrier, which is the output shaft of the gear mechanism **7**. The output shaft of the gear mechanism **7** is the shaft **31** connected to the output member **3** of the driving device.

Connected to the gear mechanism **7** is also a second input member **8** of the driving device **1**, whose shaft is connected to the input shaft of the gear mechanism **7**, which is a shaft of an unillustrated central wheel of the planetary gear mechanism. The second input member **8** is a corrective motor.

Therefore, in Fig. 1 the output of the driving device **1** according to the invention is the output shaft **31** or the output member **3** of the driving device **1.**

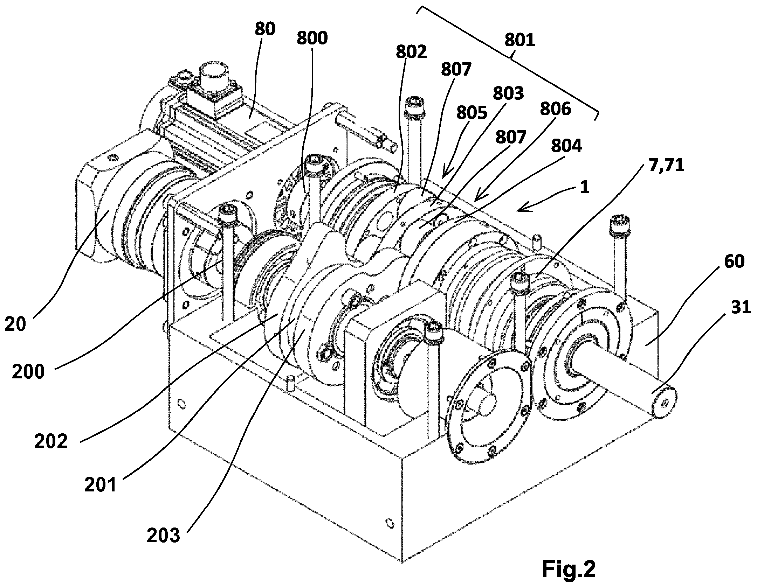

The driving device **1** is schematically represented with reference to the example of a planetary gear mechanism in Fig. 1, whereby it is shown in the particular embodiment in Fig. 2.

The components of the driving device **1** are mounted in the frame **6**.

The first input member **2** of the driving device **1** is in an exemplary embodiment a driving electric motor **20** with a constant angular velocity, to whose output shaft **200** is fixedly attached a camshaft **201** with two circumferential cams **202**, **203**, which ensure the stepping motion of the carousel in either direction.

The second input member **8** of the driving device **1** is a corrective electric motor **80** arranged with its output shaft **800** parallel to the output shaft **200** of the driving electric motor **20.** The output shaft **800** of the corrective electric motor **80** passes rotatably through the cavity in the carousel **801** rotatably mounted in the frame **6**. The carousel **801** is composed of an unillustrated hollow cylindrical hub, which is in the middle of its length and at the ends connected to annular support disks **802**, **803**, **804**. The pairs of the support disks **802**, **803** and **803**, **804** are connected on the same pitch circles, parallel to the longitudinal axis of the carousel **801** each of the pairs being fixed by four unillustrated pins, on which are rotatably mounted two rows **805**, **806**, each row having four rollers **807**.

The carousel **801** is located with respect to the position of the circumferential cams **202**, **203** in such a manner that the rollers **807** of the first row **805** engage with the first circumferential cam **202** and the rollers **807** of the second row **806** engage with the second circumferential cam **203**.

The carousel **801** is by means of a support disk **804** constituting the face of the carousel **801**, which is reversed from the corrective electric motor **80**, fixedly connected to the body **71** of the gear mechanism **7**, which is also rotatably mounted in the frame **6**.

The output shaft **800** of the corrective electric motor **80** passing through the carousel **801** enters behind the carousel **801** the body **71** of the gear mechanism **7**, in which it is fixedly connected to its unillustrated input. The output shaft **31** of the driving device **1**K is fixedly attached to the unillustrated output of the gear mechanism **7**.

The driving electric motor **20** and a mechanism consisting of two circumferential cams **202**, **203**, which is coupled to it, on the cam shaft **201** connected to the driving electric motor **20** would ensure by itself the overall required change of the angular position of the input member **4** of the driven mechanism (Fig. 1) in one step as a result of the shaft **31** of the output member **3** of the driving device **1** being turned by the same change of the angular position and at the same time. However, this applies only to a completely rigid system between the output member **3** of the driving device **1** and the input member **4** of the driven mechanism. In that case the corrective electric motor **80** would stand motionless in the zero position.

In a real device, the system comprises between the output member **3** of the driving device **1** and the input member **4** of the driven mechanism an element, which makes the system more or less flexible. This is caused, for example, by a greater constructional distance between the output member **3** of the driving device **1** and the input member **4** of the driven mechanism. The corrective electric motor **80** here serves to suppress the vibrations caused by the resilience of the flexibly resilient connecting shaft **5** between the members **3**, **4.** The function of the corrective electric motor **80** is to change the stroke dependence of the motion of the output member **3** of the driving device **1** in such a manner that at the given revolutions of the driving electric motor **20** there is no vibration of the resilient system.

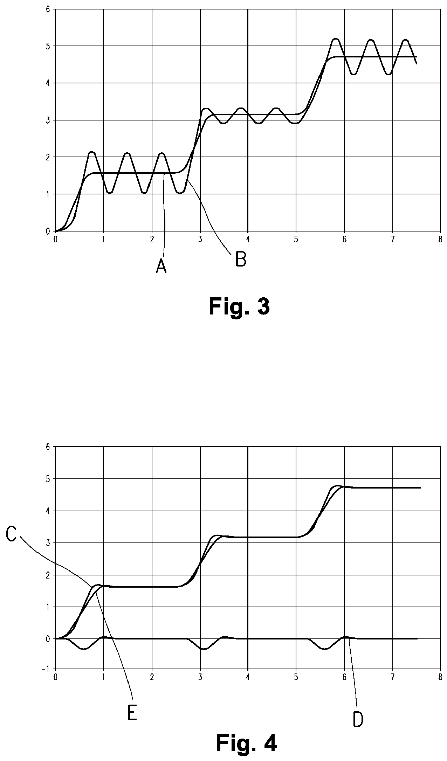

The explanation is accompanied by Figs. 3 and 4.

Fig. 3 shows an example of comparison of the desired theoretical time course **A** of the stroke of the input member **4** of the driven mechanism to the actual time course **B** of the stroke of the input member **4** of the driven mechanism without controlled correction, that is without using the corrective electric motor **80**. The horizontal axis represents time in seconds, the vertical axis represents the angle of the stroke in radians. It is apparent that in an exemplary course of one cycle of the output member **3** of the driving device **1** driven only by the driving electric motor **20**, which lasts for approximately 5 seconds, the output member **4** of the driven mechanism oscillates with an amplitude difficult to predict.

Fig. 4 shows the time course **E** of the motion of the output member **3** as a result of the common motion of the two motors, namely of the driving electric motor **20** and of the corrective electric motor **80** and the corresponding time course **C** of the stroke of the input member **4** of the driven mechanism under controlled correction. It also shows the corresponding time course **D** of the stroke of the corrective electric motor **80**. The time course **E** in Fig. 3 is not visually very different from the process **A**, but it is important that the aim of the solution, namely suppressing or, in other words, not exciting the oscillations in the system behind the resilient part, is achieved.

The advantage of the device according to the invention is practically complete suppression of the vibrations generated by the alternating or stepping motion of the output shaft of the driving device, especially when it is the drive of a resilient system, when, for example, a rotary table having a certain inertial mass is driven by a long and flexibly deformable shaft.

### List of references

- 1: driving device
- 2: first input member of the driving device
- 20: the driving electric motor (first input member 2)
- 200: the output shaft (of the driving electric motor)
- 201: camshaft
- 202: first circumferential cam
- 203: second circumferential cam
- 3: output member of the driving device
- 31: the output shaft (of the driving device)
- 4: input member of the driven mechanism
- 5: flexibly resilient connecting shaft (between the output and the end members)
- 6: frame (of the driving device)
- 7: gear mechanism
- 71: body of the gear mechanism
- 8: second input member of the driving device
- 80: corrective electric motor (second input member 8)
- 800: the output shaft of the corrective electric motor
- 801: carousel
- 802: support disk (first - of the carousel)
- 803: support disk (middle - of the carousel)
- 804: support disk (third - of the carousel)
- 805: first row of rollers
- 806: second row of rollers
- 807: roller
- A: time course of the stroke of the input member (4) of the driven mechanism (required)
- B: time course of the stroke of the input member (4) of the driven mechanism - without controlled correction
- C: time course of the stroke of the input member (4) - with controlled correction (actual)
- D: time course of the stroke of the corrective electric motor
- E: time course of the stroke of the output member (3) of the driving device (the result of the motion of the driving and the corrective electric motor)

## Claims

1. A method for absorbing vibrations of a driving device (1) driven by a cyclical movement at a constant angular velocity, whereby a flexibly resilient connecting shaft (5) is arranged before the driven mechanism between the driving electric motor (20) of the driving device (1) and the input member (4) of the driven mechanism, whereby a driving cyclical motion at a constant angular velocity is brought by the driving electric motor (20) to rotating circumferential cams (202, 203), which ensure corrective bidirectional stepping motion of a carousel (801), **characterized in that** programmable controlled corrective motion is brought to the driving device (1) by means of a corrective electric motor (80), whereupon the two motions are mechanically added up and the total motion of the driving electric motor (20) and the corrective of the corrective electric motor (80) is brought to the output member (3) of the driving device (1) before the flexibly resilient connecting shaft (5).

2. The method for absorbing vibrations according to claim 1, **characterized in that** the driving cyclical motion is transformed into a driving intermittent rotational motion, whose active phase is a driving rotational motion with a varying angular velocity, and to form a corrective motion, the rotational motion is brought with programmable controlled varying angular velocity.

3. The method for absorbing vibration according to claim 2, **characterized in that** the driving continuous rotational motion with a constant angular velocity is transformed by the action of the cam into an intermittent rotational motion (202, 203).

4. A device for performing the method for absorbing vibrations of a driving device (1) according to any of the preceding claims, in which flexibly resilient connecting shaft (5) is inserted between the output member (3) of the driving device (1) and the input member (4) of the driven mechanism, whereby the driving device (1) comprises a driving electric motor (20) with a constant angular velocity, whose output shaft (200) is connected to camshaft (201) comprising two circumferential cams (202, 203), which engage with the rollers (807) of the carousel (801), whereby the axis of the carousel (801) and the axes of its rollers (807) are parallel to the camshaft (201), **characterized in that** the carousel (801) is coaxially fixedly attached to the body (71) of the gear mechanism (7), which is rotatably mounted in a frame (6), whereby the input of the gear mechanism (7) is fixedly attached to the output shaft (800) of the corrective electric motor (80), and the output of the gear mechanism (7) is composed of an output shaft (31) of the driving device (1), which is connected to a flexibly resilient shaft (5) arranged upstream of the driven mechanism, whereby the corrective electric motor (80) is a servomotor with a varying angular velocity controlled by programming.
